(19) Europäisches Patentamt
European Patent Office
Office européen des brevets

(11) **EP 3 767 321 A1**

(12) **EUROPEAN PATENT APPLICATION**
published in accordance with Art. 153(4) EPC

(43) Date of publication:
**20.01.2021 Bulletin 2021/03**

(51) Int Cl.:
***G01S 5/06*** *(2006.01)*

(21) Application number: **18916112.8**

(22) Date of filing: **23.04.2018**

(86) International application number:
**PCT/JP2018/016485**

(87) International publication number:
**WO 2019/207628 (31.10.2019 Gazette 2019/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Mitsubishi Electric Corporation Tokyo 100-8310 (JP)**

(72) Inventors:
• **TERADA, Tsubasa Tokyo 100-8310 (JP)**
• **OSHIMA, Tadashi Tokyo 100-8310 (JP)**
• **AMISHIMA, Takeshi Tokyo 100-8310 (JP)**
• **SUZUKI, Nobuhiro Tokyo 100-8310 (JP)**

(74) Representative: **Pfenning, Meinig & Partner mbB Patent- und Rechtsanwälte Theresienhöhe 11a 80339 München (DE)**

(54) **DISPLACEMENT MEASUREMENT DEVICE**

(57) Provided is a displacement measurement device including: a radio wave transmitter installed at a measurement position, which is configured to transmit radio waves of a plurality of frequencies from a transmission antenna; and a radio wave receiver installed at a fixed position, which is configured to calculate a positioning value of the transmission antenna based on results of receiving the radio waves of the plurality of frequencies transmitted from the transmission antenna. The radio wave transmitter includes: a plurality of reception antennas each configured to output received signals indicating the results of receiving the radio waves of the plurality of frequencies; a relative phase combining unit configured to combine, for the plurality of frequencies, relative phases between the plurality of reception antennas; a relative phase shifting unit configured to shift the relative phase between the plurality of frequencies, which is combined by the relative phase combining unit; and a positioning calculation unit configured to calculate the positioning value of the transmission antenna based on the relative phase shifted by the relative phase shifting unit.

FIG. 1

**Description**

Technical Field

The present invention relates to a displacement measurement device, which is suitable for measuring, for example, a displacement or vibration of an object to be measured, such as an inclined surface or a structure.

Background Art

Hitherto, there has been known a vibration displacement measurement device (e.g., refer to Patent Literature 1) configured to measure a displacement or vibration of, for example, a structure, as a technology of using radio waves to measure distortion due to vibration of an object to be measured or an amount of displacement from a reference position of the object to be measured.

In this vibration displacement measurement device, a radio wave transmitter is installed for each measurement position of the structure, and a plurality of reception antennas installed at fixed positions are configured to receive radio waves transmitted by the respective radio wave transmitters at different timings. Then, radio wave receivers connected to the respective reception antennas independently estimate a position of each measurement position of the structure at the same time based on a difference in delay time between two reception antennas. Meanwhile, this vibration displacement measurement device assumes an ideal usage environment in which there is no source that reflects a radio wave around a transmission antenna of the radio wave transmitter and each reception antenna.

Citation List

Patent Literature

[PTL 1] JP 3602403 B2

Summary of Invention

Technical Problem

The technology of Patent Literature 1 given above assumes an ideal usage environment in which there is no source that reflects a radio wave. Thus, there is a problem in that an error occurs in a measured displacement under a so-called multipath environment in which there is a reflection source in the usage environment. This is because a plurality of waves reach each reception antenna, and a phase rotates with respect to a true value due to combining of the plurality of waves. As a result, an error occurs in the measured displacement. Meanwhile, the reflection source includes, for example, vegetation such as grass and trees, the ground, a building, or a structure, for example, a poll.

To address this issue, in the case of vegetation, removal of the vegetation is conceivable as a solution in this case. However, when the displacement is measured in a long period of time, that is, for years, the cost of removing the vegetation is enormous. As another solution, a method of setting directivity for a transmission antenna and each reception antenna of the radio wave transmitter is conceivable. However, when a plurality of radio wave transmitters are used to measure a wide range of an inclined surface with a danger of a landslide, for example, it is difficult to control the directivity, and at the same time, the apparatus scale becomes larger. Therefore, the method of setting directivity is not suitable as a solution.

The present invention has been made to solve the above-mentioned problem, and has an object to provide a displacement measurement device capable of reducing an error of a measured displacement even under a multipath environment.

Solution to Problem

In order to achieve the above-mentioned object, according to one embodiment of the present invention, there is provided a displacement measurement device including: a radio wave transmitter installed at a measurement position; and a radio wave receiver installed at a fixed position, wherein the radio wave transmitter is configured to transmit radio waves of a plurality of frequencies via a transmission antenna, wherein the radio wave receiver is configured to calculate a positioning value of the transmission antenna of the radio wave transmitter based on results of receiving the radio waves of the plurality of frequencies transmitted from the radio wave transmitter via the transmission antenna, and wherein the radio wave receiver includes: M reception antennas (where M represents a positive integer of two or more) each configured to output received signals indicating the results of receiving the radio waves of the plurality of frequencies transmitted from the radio wave transmitter; a relative phase combining unit configured to combine, for the plurality of frequencies, relative phases between the M reception antennas; a relative phase shifting unit configured to shift the relative phase combined by the relative phase combining unit based on a difference in observed phase between the M reception antennas; and a positioning calculation unit configured to calculate the positioning value of the transmission antenna based on the relative phase shifted by the relative phase shifting unit.

Advantageous Effects of Invention

According to the present invention, with the configuration described above, it is possible to reduce an error of the measured displacement even under the multipath environment.

Brief Description of Drawings

FIG. 1 is a block diagram for illustrating a basic configuration of a displacement measurement device according to a first embodiment of the present invention.
FIG. 2 is a block diagram for illustrating a hardware configuration of a main part of a radio wave receiver included in the displacement measurement device illustrated in FIG. 1.
FIG. 3 is a block diagram for illustrating a detailed configuration of a relative phase combining unit included in the main part of the radio wave receiver included in the displacement measurement device illustrated in FIG. 1.
FIG. 4 is a flow chart for illustrating operation processing of from relative phase calculation to positioning calculation to be executed by a CPU being a main part of the radio wave receiver illustrated in FIG. 3.
FIG. 5 is a graph for showing results of verifying an experiment of positioning calculation executed by the displacement measurement device illustrated in FIG. 1 as a relationship between the number of samples and the displacement of a radio wave transmitter in an X-axis direction.
FIG. 6 is a table for showing an example of specification data of the experiment of FIG. 5.
FIG. 7 is a schematic diagram for illustrating, as three-dimensional coordinates, a positional relationship between the radio wave transmitter and a reception antenna in the experiment of FIG. 5.
FIG. 8 is a block diagram for illustrating a detailed configuration of a relative phase combining unit included in a main part of a radio wave receiver included in a displacement measurement device according to a second embodiment of the present invention.
FIG. 9 is a flow chart for illustrating operation processing of from correlation matrix calculation to positioning calculation to be executed by a CPU being a main part of the radio wave receiver included in the displacement measurement device according to the second embodiment of the present invention.

Description of Embodiments

Now, description is made in detail of a displacement measurement device according to some embodiments of the present invention with reference to the drawings.

First Embodiment

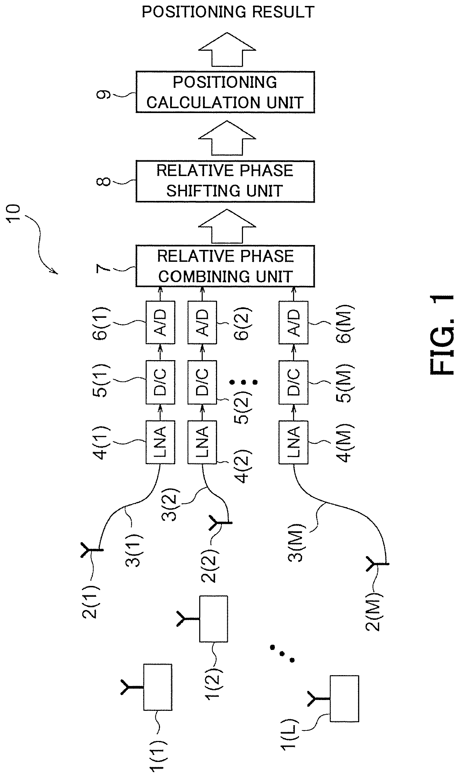

FIG. 1 is a block diagram for illustrating a basic configuration of a displacement measurement device 10 according to a first embodiment of the present invention.
Referring to FIG. 1, the displacement measurement device 10 includes a plurality of radio wave transmitters 1(l) to 1(L) installed at measurement positions, and radio wave receivers installed at fixed positions. The symbol L represents a natural number. Each of the plurality of radio wave transmitters 1(1) to 1(L) is configured to transmit radio waves of a plurality of frequencies from transmission antennas. Meanwhile, the radio wave receiver is configured to calculate a positioning value of each transmission antenna based on results of receiving radio waves of a plurality of frequencies transmitted from respective transmission antennas.
The radio wave receiver includes a plurality of reception antennas 2(1) to 2(M), a plurality of transfer cables 3(1) to 3(M), a plurality of low noise amplifiers (LNA) 4(1) to 4(M), a plurality of frequency converters (D/C) 5(1) to 5(M), and a plurality of A/D converters 6(1) to 6(M), and M systems of reception circuits are formed as illustrated in FIG. 1. The symbol M represents a positive integer of 2 or more. Further, the radio wave receiver includes a relative phase combining unit 7, a relative phase shifting unit 8, and a positioning calculation unit 9, which are located downstream of the plurality of A/D converters 6(1) to 6(M).
The reception antennas 2(1) to 2(M) are configured to output received signals of the plurality of systems to the respective transfer cables 3(1) to 3(M). The received signals represent results of receiving radio waves of a plurality of frequencies transmitted from the transmission antennas of the plurality of radio wave transmitters 1(1) to 1(L). For example, the reception antenna 2(M) outputs, to the transfer cable 3(M), received signals of the plurality of systems representing results of receiving radio waves of a plurality of frequencies transmitted from the transmission antennas of the radio wave transmitters 1(1) to 1(L).

The low noise amplifiers 4(1) to 4(M) are configured to subject received signals of the plurality of systems, which are transferred to the transfer cables 3(1) to 3(M), to low-noise amplification, and pass the resultant signals to the frequency converters 5(1) to 5(M). For example, the low noise amplifier 4(M) subjects received signals of the plurality of systems, which are transferred to the transfer cable 3(M), to low-noise amplification, and passes the resultant signals to the frequency converter 5(M).

The frequency converters 5(1) to 5(M) are each configured to convert frequencies of the received signals of the plurality of systems subjected to low-noise amplification. For example, the frequency converter 5(M) converts frequencies of the received signals of the plurality of systems subjected to low-noise amplification by the low noise amplifier 4(M).

The A/D converters 6(1) to 6(M) are each configured to convert analog signals of the received signals of the plurality of systems, for which the frequencies are converted, into digital signals. For example, the A/D converter 6(M) converts analog signals of the received signals of the plurality of systems, for which the frequencies are converted by the frequency converter 5(M), into digital signals.

Further, the relative phase combining unit 7 is configured to combine, for the input digital signals of the respective plurality of systems, relative phases between the reception antennas 2(1) to 2(M) for the plurality of frequencies. The relative phase shifting unit 8 is configured to shift the combined relative phase of the plurality of frequencies. The positioning calculation unit 9 is configured to calculate positioning values of the transmission antennas based on the shifted relative phase.

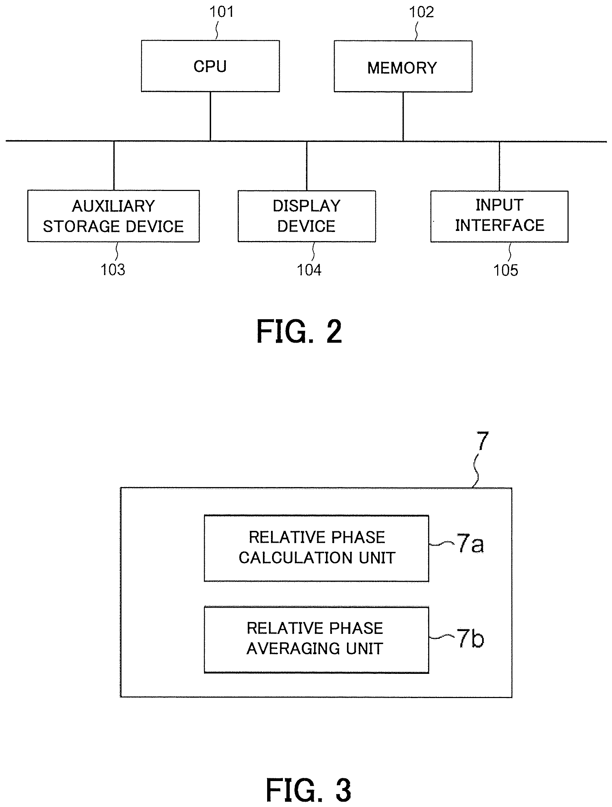

FIG. 2 is a block diagram for illustrating a hardware configuration of a main part of the radio wave receiver included in the displacement measurement device 10 described above.

Referring to FIG. 2, the radio wave receiver is illustrated in terms of hardware of the functional configurations of the relative phase combining unit 7, the relative phase shifting unit 8, and the positioning calculation unit 9, which are located downstream of the A/D converters 6(1) to 6(M).

Specifically, the radio wave receiver is constructed in terms of hardware by connecting a central processing unit (CPU) 101, a memory 102, an auxiliary storage device 103, a display device 104, and an input interface 105 through a data bus. The input interface 105 is configured to receive input of the digital signals of the received signals of the respective plurality of systems, for which the frequencies are converted, and which are obtained from the A/D converters 6(1) to 6(M). The functional processing of the relative phase combining unit 7, the relative phase shifting unit 8, and the positioning calculation unit 9 described above is executed by central arithmetic processing of the CPU 101 in accordance with a program and data stored in the memory 102. The positioning result obtained by the central arithmetic processing of the CPU 101 is stored in the auxiliary storage device 103 in an accumulated manner, and is displayed on the display device 104.

Next, description is made of the operation processing to be executed by the displacement measurement device 10 illustrated in FIG. 1. The radio wave transmitters 1(1) to 1(L) installed at the measurement positions transmit radio waves of a plurality of frequencies at the same time or in the manner of time division from the transmission antenna at the time of measurement. As the measurement positions, the radio wave transmitters 1(1) to 1(L) are installed at locations expected to have a displacement of a structure or an inclined surface with a danger of a landslide, for example.

The radio wave receiver receives radio waves of a plurality of frequencies from the respective transmission antennas independently by the reception antennas 2(1) to 2(M) installed at a plurality of fixed positions. The reception antennas 2(1) to 2(M) output the received signals being reception results to the transfer cables 3(1) to 3(M) independently.

The received signals that have passed through the transfer cables 3(1) to 3(M) are amplified by the low noise amplifiers 4(1) to 4(M) independently, and then output to the frequency converters 5(1) to 5(M) independently. It should be noted that, when the transfer cables 3(1) to 3(M) have large power attenuation, low noise amplifiers may be added to the reception antennas 2(1) to 2(M).

The frequency converters 5(1) to 5(M) convert the respective amplified received signals to desired intermediate frequencies individually, and then output the desired intermediate frequencies to the A/D converters 6(1) to 6(M) independently. The A/D converters 6(1) to 6(M) convert the intermediate frequencies of the respective amplified received signals into digital signals for respective frequencies of the reception antennas 2(1) to 2(M) individually.

The relative phase combining unit 7 combines, based on the digital signals for respective frequencies of the reception antennas 2(1) to 2(M), relative phases of the reception antennas 2(1) to 2(M) for the plurality of frequencies. The relative phase shifting unit 8 shifts the relative phase combined by the relative phase combining unit 7. The positioning calculation unit 9 executes positioning calculation by using the relative phase shifted by the relative phase shifting unit 8. As the positioning calculation, a phase difference positioning method described in, for example, Patent Literature 1 can be employed.

The displacement measurement device 10 according to the first embodiment can measure the displacement of each of the radio wave transmitters 1(1) to 1(L) by arranging the positioning results output from the positioning calculation unit 9 in a chronological order. As a result, it is possible to reduce an error of the measured displacement even under a multi-path environment.

FIG. 3 is a block diagram for illustrating a detailed configuration of the relative phase combining unit 7 included in the radio wave receiver included in the displacement measurement device illustrated in FIG. 1.

Referring to FIG. 3, the relative phase combining unit 7 includes a relative phase calculation unit 7a configured to calculate relative phases for a plurality of frequencies, and a relative phase averaging unit 7b configured to calculate an average of the relative phases for a plurality of frequencies.

Now, description is made in detail of the processing operations of the relative phase combining unit 7, the relative phase shifting unit 8, and the positioning calculation unit 9 being main parts of the radio wave receiver. The number of samples is represented by n, and a received signal vector having elements corresponding to the number M of reception antenna elements in the frequency fk (k=1, 2, ..., K) is represented by $x_{fk}[n]$. Each element of the vector is a received signal of a reception antenna element obtained through A/D conversion, which is obtained by adding receiver noise to a transmission signal multiplied by a complex response (namely, phase rotation and attenuation due to transmission).

In the phase difference measurement calculation, a phase difference (arrival time difference) between signals transmitted from the radio wave transmitters 1(1) to 1(L) to the reception antennas 2(1) to 2(M) is used to perform positioning of each of the radio wave transmitters 1(1) to 1(L). In general, positioning is performed based on a difference (relative phase) in reception phase between the reception antennas 2(1) to 2(M) with respect to a specific reception antenna among the reception antennas 2(1) to 2(M).

The relative phase combining unit 7 combines, based on the digital signals for a plurality of frequencies of the reception antennas 2(1) to 2(M), relative phases of the reception antennas 2(1) to 2(M) for the plurality of frequencies. The relative phase can be calculated by using an eigenvector obtained from a correlation matrix of received signals, for example. A correlation matrix $R_{xx,fk}$ of received signals for the frequency fk is represented by Expression (1) given below.

$$\mathbf{R}_{\mathrm{xx},f_k} = \mathrm{E}\left[\mathbf{x}_{f_k}[n]\mathbf{x}_{f_k}^H[n]\right] \qquad (1)$$

The symbol E[] in Expression (1) given above represents expected value calculation, and $x^H$ represents a Hermitian transpose of a vector x. More strictly, it is impossible to accurately obtain the correlation matrix $R_{xx,fk}$. Thus, correlation matrix estimation represented by Expression (2) given below is executed by using a sample average based on ergodicity.

$$\widehat{\mathbf{R}}_{\mathrm{xx},f_k} = \frac{1}{N}\sum_{n=1}^{N}\mathbf{x}_{f_k}[n]\mathbf{x}_{f_k}^H[n] \qquad (2)$$

The symbol N in Expression (2) given above represents the number of samples. When a maximum eigenvalue of correlation matrix estimation is represented by $\gamma_{fk}$, and an eigenvector corresponding to the maximum eigenvalue $\gamma_{fk}$ is represented by $q_{fk}$, the relationship of Expression (3) given below is satisfied.

$$\widehat{\mathbf{R}}_{\mathrm{xx},f_k}\mathbf{q}_{f_k} = \gamma_{f_k}\mathbf{q}_{f_k} \qquad (3)$$

In an ideal environment without an interference wave, for example, an eigenvector corresponding to a maximum eigenvalue obtained through eigenvalue calculation of the correlation matrix corresponds to a complex response vector including complex responses of the reception antennas 2(1) to 2(M). Thus, a relative phase vector $p_{fk}$ of the plurality of frequencies is represented by Expression (4) given below.

$$\mathbf{p}_{f_k} = \angle\mathbf{q}_{f_k} \qquad (4)$$

It should be noted that $\angle q$ in Expression (4) given above represents phase angle calculation of a vector q.

When the phase difference is measured under a multi-path environment, incoming waves are combined due to presence of a plurality of paths between the radio wave transmitters 1(1) to 1(L) and the reception antennas 2(1) to 2(M). As a result, the received phase rotates from a received phase including only the direct wave, resulting in a risk in that an error occurs in the measurement result. In addition, there is a risk in that incoming waves cancel each other, and a signal-to-noise ratio (SNR) deteriorates. To address this issue, in the first embodiment, relative phases calculated for respective frequencies are averaged to reduce those risks. When the averaged relative phase is represented by $\varphi$, the relative phase $\varphi$ is represented by Expression (5) given below.

$$\boldsymbol{\phi} = \left\langle \mathbf{p}_{f_k} \right\rangle_{k=1}^{K} \qquad (5)$$

A superscript K and a subscript k=1 within a symbol <> of Expression (5) given above represent averaging calculation for k=1, 2, ..., K.

Now, description is made of a reason why an error can be reduced by averaging relative phases for the plurality of frequencies. When a sum of independent random variables $U_1$, $U_2$, ..., $U_K$ having the same distribution is represented by Z, the relationship of Expression (6) given below is satisfied by the central limit theorem.

$$Z \rightarrow \mathrm{N}(z | K\mu, K\sigma^2) \qquad (6)$$

The symbol $\mathrm{N}(z|\mu, \sigma^2)$ in Expression (6) given above represents a probability density distribution at a time when the sum Z follows a normal distribution of an average $\mu$ and a variance $\sigma^2$. The symbol "$\rightarrow$" means the fact that the distribution of the sum Z approaches $\mathrm{N}(z|K\mu, K\sigma^2)$ as K becomes larger. Thus, when the relative phase can be regarded as having an independent and same distribution among frequencies, a standard deviation of the sum of relative phases for the plurality of frequencies ideally decreases at a rate of $1/K^{0.5}$. For example, compared to the case of K=1, the deviation of errors decreases to half the value when the number of frequencies for averaging calculation is set to K=4.

When the displacements of the radio wave transmitters 1(1) to 1(L) are sufficiently small with respect to the frequencies of signals transmitted from the radio wave transmitters 1(1) to 1(L) and its maximum frequency width, the displacements of the observed relative phases can be regarded to be almost the same among the plurality of frequencies.

For example, it is assumed that signals are transmitted at two frequencies of 922.5 MHz and 927.5 MHz from the radio wave transmitters. For the simplicity of description, it is assumed that the two reception antennas 2(1) and 2(2) are installed so as to sandwich the radio wave transmitters 1(1) to 1(L), and the radio wave transmitters 1(1) to 1(L) and the reception antennas 2(1) to 2(M) are arranged in a straight line. When the radio wave transmitters 1(1) to 1(L) have been displaced by 100 mm along the straight line, a difference in phase for a plurality of frequencies through the displacement is calculated.

Specifically, the difference before the displacement is 22.16 [deg], which is obtained by multiplying $10 \cdot 10^{-3} \cdot 2 \cdot [922.5 \cdot 10^6 / 299792458]$ by 360. Further, the difference after the displacement is 22.28 [deg], which is obtained by multiplying $10 \cdot 10^{-3} \cdot 2 \cdot [927.5 \cdot 10^6 / 299792458]$ by 360. This indicates the fact that there is only the deviation of 0.12 [deg] and about 0.1 mm among the plurality of frequencies. In such a case, an error due to the difference in frequency is ignorably small when averaging calculation is performed without particularly taking into consideration a difference in phase rotation due to the difference in frequency.

Further, the relative phases for a plurality of frequencies to be used for averaging calculation are subjected to unwrapping processing as required so as to be smoothed with respect to a time axis. In the above-mentioned example, description has been made of a case of calculating the relative phases for a plurality of frequencies by using an eigenvector of the correlation matrix of received signals. Instead, the relative phase may be calculated by multiplying complex conjugates of a received signal of a reception antenna serving as a reference and received signals of the reception antennas 2(1) to 2(M). The received signal vector in the frequency fk is represented by Expression (7) given below.

$$\mathbf{x}_{f_k}[n] = \left( x_{f_k,1}[n], x_{f_k,2}[n], \cdots, x_{f_k,M}[n] \right)^T \qquad (7)$$

A superscript T of Expression (7) given above represents a transpose of a matrix. Further, the relative phase of a reception antenna m (m=1, 2,..., M) with respect to an antenna $m_{ref}$ serving as a reference is represented by Expression (8) given below.

$$p_{fk,m} = \angle\left(\left\langle x_{fk,m}[n]x^*_{fk,m_\text{ref}}[n]\right\rangle_{n=1}^N\right) \qquad (8)$$

The symbol "*" of Expression (8) given above represents a complex conjugate, and $p_{fk}=(p_{fk,1}, p_{fk,2}, ..., p_{fk,M})^\mathsf{T}$ is satisfied. A deviation in offset due to averaging calculation has occurred in the relative phase obtained by the relative phase combining unit 7. This deviation in offset has such a characteristic that there is no temporal variation and a fixed value is obtained for each channel under an ideal state in which the surroundings environment, such as a multipath environment or a shielding environment, does not change.

In addition, different phase delays occur between channels at the time of transfer of a signal in a wireless frequency circuit including the reception antennas 2(1) to 2(M) to signal processing. In order to perform accurate measurement, it is required to correct those phase offsets. Thus, the relative phase shifting unit 8 executes processing of simultaneously compensating for phase offsets between channels, which occur in averaging calculation and the wireless frequency circuit.

For example, the observed phase of the radio wave receiver m obtained from the radio wave transmitter l (l=1, 2, ..., L) is represented by Expression (9) given below.

$$\phi_{l,m} = \frac{2\pi}{\lambda}\left(r_{l,m} + s_l + u_m + a_m\right) + 2\pi N_{l,m} \qquad (9)$$

The symbol $s_l$ in Expression (9) given above represents an initial phase of the radio wave transmitter 1, $u_m$ represents a phase delay amount of the radio wave receiver m, $a_m$ represents a phase offset due to averaging calculation, $N_{l,m}$ represents an integer value bias, and $r_{l,m}$ represents a distance between the radio wave transmitter and radio wave receiver. Further, the distance $r_{l,m}$ between the radio wave transmitter and the radio wave receiver is represented by Expression (10) given below by using a position $(x_l, y_l, z_l)$ of the radio wave transmitter 1 and a position $(x_m, y_m, z_m)$ of the known radio wave receiver m.

$$r_{l,m} = \sqrt{(x_l - X_m)^2 + (y_l - Y_m)^2 + (z_l - Z_m)^2} \qquad (10)$$

On the basis of Expression (10) given above, the phase delay amount $u_m$ of the radio wave receiver m and the phase offset $a_m$ due to averaging calculation each depend only on the radio wave receiver m. Thus, when the phase delay amount $u_m$ of the radio wave receiver m has not been determined yet and iterative estimation is performed, for example, the phase delay amount $u_m$ of the radio wave receiver m and the phase offset $a_m$ due to averaging calculation may be estimated in bulk as a sum vm thereof. In this case, the observed phase can be rewritten as in Expression (11) given below.

$$\phi_{l,m} = \frac{2\pi}{\lambda}\left(r_{l,m} + s_l + v_m\right) + 2\pi N_{l,m} \qquad (11)$$

Further, the position of the radio wave transmitter 1 is obtained by solving simultaneous equations of Expression (12) given below by using a difference in observed phase between two radio wave receivers m1 and m2 as the radio wave receiver m.

$$\left(\phi_{l,m_1} - \phi_{l,m_2}\right) - \theta_{m_1,m_2} = \frac{2\pi}{\lambda}\left(r_{l,m_1} - r_{l,m_2}\right) + 2\pi\left(N_{l,m_1} - N_{l,m_2}\right) \qquad (12)$$

In Expression (12) given above, the phase shift amount $\theta_{m1,m2}=2\pi(v_{m1}-v_{m2})/\lambda$ is set. In Expression (12) given above, the integer value bias can be obtained by using positional information, for example, a previous measurement value. Calculation of the phase shift amount $\theta_{m1,m2}$ uses coordinates of the radio wave transmitter 1 for which the position is known by positioning using a laser, for example, a total station, or positioning by the global navigation satellite system (GNSS). Then, the phase shift amount $\theta_{m1,m2}$ can be obtained by using a difference in observed phase between the radio wave transmitter 1 and the radio wave receivers $m_1$ and $m_2$ and a difference in phase obtained through arrangement of the radio wave receivers $m_1$ and $m_2$. The phase shift amount $\theta_{m1,m2}$ is represented by Expression (13) given below.

$$\theta_{m_1,m_2} = 2\pi \cdot \mathrm{dec}\left[\frac{1}{2\pi}\left(\phi_{l,m_1} - \phi_{l,m_2}\right) - \frac{1}{\lambda}\left(\tilde{r}_{l,m_1} - \tilde{r}_{l,m_2}\right)\right] \qquad (13)$$

The symbol dec[$\zeta$] in Expression (13) given above represents integer part removal calculation of subtracting an integer closest to "$\zeta$" from "$\zeta$". Further, when k represents a number of the given radio wave receiver m, the distance between the radio wave transmitter and the radio wave receiver is represented by Expression (14) given below.

$$\tilde{r}_{l,k} = \sqrt{(\tilde{x}_l - X_k)^2 + (\tilde{y}_l - Y_k)^2 + (\tilde{z}_l - Z_k)^2} \qquad (14)$$

Incidentally, when there are a plurality of radio wave transmitters 1 having known positions, improvement of the accuracy can be expected by performing an averaging operation for the radio wave transmitter 1. The phase shift amount after averaging calculation is represented by Expression (15) given below.

$$\bar{\theta}_{m_1,m_2} = 2\pi \cdot \left\langle \mathrm{dec}\left[\frac{1}{2\pi}\left(\phi_{l,m_1} - \phi_{l,m_2}\right) - \frac{1}{\lambda}\left(\tilde{r}_{l,m_1} - \tilde{r}_{l,m_2}\right)\right]\right\rangle_{l=1}^{L} \qquad (15)$$

In the above, description has been made of a case in which the phase delay amount $u_m$ of the radio wave receiver m and the phase offset $a_m$ due to averaging calculation are estimated in bulk as the sum vm thereof. However, when the phase delay amount $u_m$ of the radio wave receiver m is known through calibration performed before measurement, for example, or when the phase delay amount $u_m$ can be ignored, only the phase offset $a_m$ may be estimated to perform shifting.

The phase offset $a_m$ can be obtained by a difference between an initial value of the relative phase of a reference frequency and an initial value of the relative phase after averaging calculation. When the initial value of the relative phase of the reference frequency at a time when the reference frequency is represented by $f_{ref}$ is represented by $p_{fref,0}$, and the initial value of the relative phase after averaging calculation is represented by $\varphi_0$, an estimated vector value of the shift amount is represented by Expression (16) given below.

$$\hat{\mathbf{a}} = \mathbf{p}_{f_{ref},0} - \boldsymbol{\phi}_0 \qquad (16)$$

A vector a of the shift amount relating to derivation of Expression (16) given above is a=$(a_1, a_2, ..., a_M)^T$. Further, as in Expression (17) given below, it is possible to improve the accuracy of the shift amount by averaging calculation.

$$\tilde{\mathbf{a}} = \left\langle \mathbf{p}_{f_{ref},c}\right\rangle_{c=1}^{C} - \left\langle \boldsymbol{\phi}_d\right\rangle_{d=1}^{D} \qquad (17)$$

The $p_{fref,C}$ and $\varphi_d$ in Expression (17) given above represent the c-th (c=1, 2, ..., C) relative phase of the reference frequency, and the d-th (d=1, 2, ..., D) relative phase after averaging, respectively.

In short, the relative phase shifting unit 8 has a function of shifting the relative phase after averaging calculation by the relative phase averaging unit 7 to a position of the relative phase obtained by positioning values of the radio wave transmitters 1(1) to 1(L) and the reception antennas 2(1) to 2(M). Alternatively, the relative phase shifting unit 8 has a function of shifting the relative phase after averaging calculation by the relative phase averaging unit 7 to an initial value of the relative phase of the reference frequency $f_{ref}$.

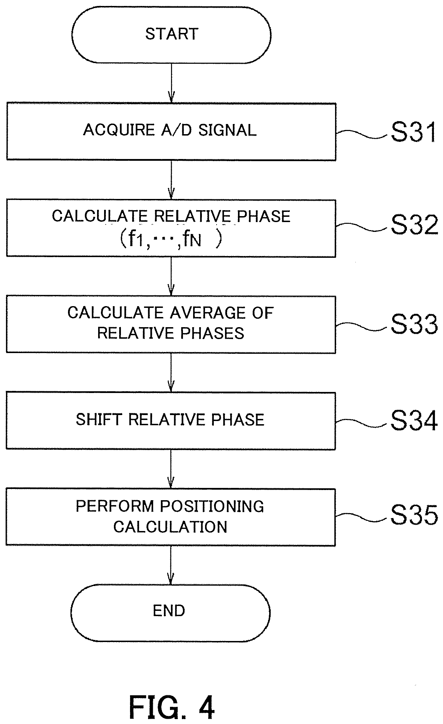

FIG. 4 is a flow chart for illustrating operation processing of from the relative phase calculation to the positioning calculation to be executed by the CPU 101 being a main part of the radio wave receiver described above.

Referring to FIG. 4, first, in Step S31, the CPU 101 acquires, from the input interface 105, digital signals relating to received signals of a plurality of frequencies after A/D conversion. In this manner, A/D signal acquisition is performed.

Next, in Step S32, the CPU 101 uses a function of the relative phase combining unit 7 to calculate relative phases from respective acquired digital signals of the plurality of frequencies $f_1, ..., f_N$. As a result, relative phase calculation ($f_1, ..., f_N$) is performed.

Further, in Step S33, the CPU 101 uses a function of the relative phase combining unit 7 to calculate an average of relative phases calculated for the plurality of frequencies. In this manner, relative phase averaging calculation is performed.

Next, in Step S34, the CPU 101 uses a function of the relative phase shifting unit 8 to correct, by shift processing, a deviation in offset and a deviation in phase between reception channels due to averaging calculation. In this manner, relative phase shifting is performed.

Lastly, in Step S35, the CPU 101 uses a function of the positioning calculation unit 9 to perform positioning calculation by, for example, the method described in Patent Literature 1 by using the relative phase after shift processing.

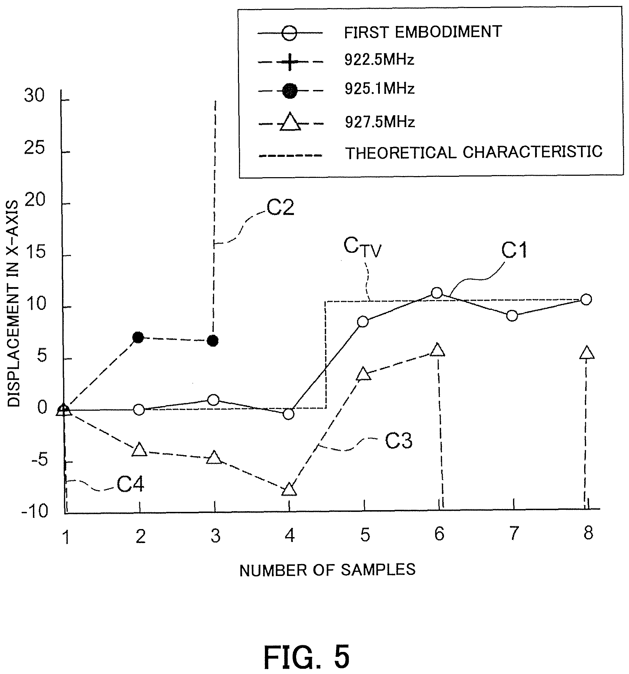

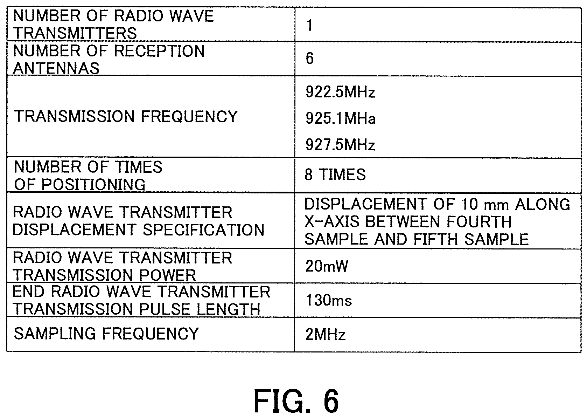

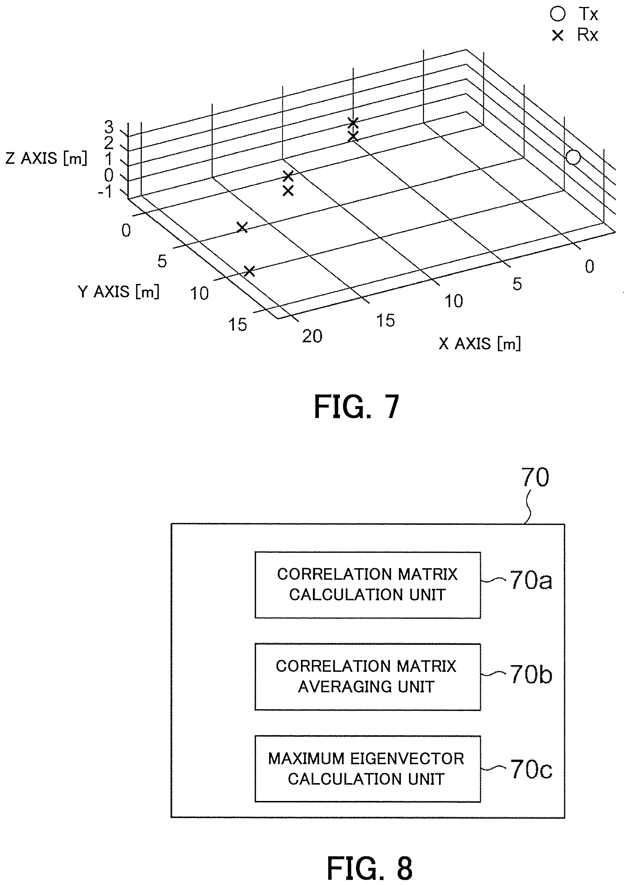

FIG. 5 is a graph for showing results of verifying an experiment of positioning calculation executed by the displacement measurement device 10 according to the first embodiment as a relationship between the number of samples and the displacement of a radio wave transmitter in an X-axis direction. Further, FIG. 6 is a table for showing an example of specification data of the experiment. Further, FIG. 7 is a schematic diagram for illustrating, as three-dimensional coordinates, a positional relationship between the radio wave transmitter and the reception antenna in the experiment. In FIG. 7, the radio wave transmitter corresponds to Tx, and a plurality of reception antennas correspond to Rx.

In this experiment, as illustrated in FIG. 7, six reception antennas Rx are used to measure the position of one radio wave transmitter Tx, and the radio wave transmitter Tx is displaced by 10 mm in the X-axis direction at an intermediate time point of measurement. Then, the measurement result for each frequency and the result of measuring the relative phase after averaging calculation are compared with each other.

Specifically, as shown in FIG. 6, the transmission frequencies are 922.5 MHz, 925.1 MHz, and 927.5 MHz. The number of times of measurement (number of samples) is 8. Further, the radio wave transmitter Tx is displaced by 10 mm in the X-axis direction between a fourth sample and a fifth sample. Further, the transmission power in the radio wave transmitter Tx is set to be 20 mW, and the transmission pulse length in the radio wave transmitter Tx is set to be 130 ms. In addition, the sampling frequency is set to be 2 MHz.

In FIG. 5, the following characteristics C1 to C4 and a theoretical characteristic $C_{TV}$ are shown in comparison. The characteristic C1 is a characteristic relating to the result of positioning using the relative phase after averaging calculation, and is indicated by the solid line. The characteristics C2 to C4 are characteristics relating to the positioning result for each frequency, and are indicated by the broken lines. The theoretical characteristic $C_{TV}$ is a characteristic relating to a true value of displacement, and is indicated by the broken line.

Referring to FIG. 5, the characteristic C3 of 927.5 MHz increases a negative displacement value between one sample corresponding to a displacement of 0 mm in the X-axis direction and four samples, and then transitions to a positive displacement value after exceeding 5 samples. Further, the characteristic C4 of 922.5 MHz reaches a negative displacement value (not shown) along the X-axis direction when reaching two samples from one sample corresponding to the displacement of 0 mm in the X-axis direction. Further, the characteristic C2 of 925.1 MHz has a positive displacement value in the X-axis direction until reaching two samples, and reaches a positive displacement value (not shown) in the X-axis direction at three samples.

In any case, on the basis of the measurement result for each frequency, the characteristics C2, C3, and C4 have a larger deviation. In particular, it is understood that a cycle slip that causes erroneous estimation of an integer value bias has occurred when the characteristic C2 and the characteristic C4 reach three samples and two samples, respectively. However, as in the first embodiment, when relative phases are combined for a plurality of frequencies and positioning calculation is performed after shifting the combined relative phase based on the difference in observed phase, as shown in the characteristic C1, the positioning result approaches the theoretical characteristic $C_{TV}$ of the true value, and the positioning accuracy is improved. For the improvement of the positioning accuracy, when relative phases are combined for a plurality of frequencies, it is effective to calculate an average of relative phases for respective plurality of frequencies. That is, according to the displacement measurement device 10 of the first embodiment, it is possible to reduce an error of the measured displacement even under a multi-path environment.

Second Embodiment

A displacement measurement device according to a second embodiment of the present invention is similar to that of FIG. 1 in terms of basic configuration, but detailed processing functions are different.

FIG. 8 is a block diagram for illustrating a detailed configuration of the relative phase combining unit 70 included in the radio wave receiver included in the displacement measurement device according to the second embodiment of the present invention.

Referring to FIG. 8, the relative phase combining unit 70 includes a correlation matrix calculation unit 70a, a correlation matrix averaging unit 70b, and a maximum eigenvector calculation unit 70c. The correlation matrix calculation unit 70a is configured to calculate a correlation matrix for each of a plurality of frequencies based on a received signal for each of the reception antennas 2(1) to 2(M). The correlation matrix averaging unit 70b is configured to calculate an average of the correlation matrices between the plurality of frequencies. The maximum eigenvector calculation unit 70c is configured to calculate and output a relative phase based on an eigenvector corresponding to a maximum eigenvalue of the correlation matrix averaged by the correlation matrix averaging unit 70b.

The correlation matrix after the averaging calculation is represented by Expression (18) given below.

$$\overline{\mathbf{R}}_{\mathrm{xx}} = \left\langle \widehat{\mathbf{R}}_{\mathrm{xx},f_k} \right\rangle_{k=1}^{K} \qquad (18)$$

Further, a relationship with the correlation matrix after the averaging calculation is represented by Expression (19) given below by using an average value of maximum eigenvalues $\gamma$ of correlation matrices after the averaging calculation and an average value of the corresponding eigenvectors q.

$$\overline{\mathbf{R}}_{\mathrm{xx}}\overline{\mathbf{q}} = \overline{\gamma}\overline{\mathbf{q}} \qquad (19)$$

With this, an average value of relative phases $\varphi$ after the averaging calculation in the second embodiment is represented by Expression (20) given below.

$$\overline{\mathbf{\phi}} = \angle\overline{\mathbf{q}} \qquad (20)$$

In the following, positioning calculation is performed similarly to the case of the first embodiment by using the average value of relative phases $\varphi$ after the averaging calculation.

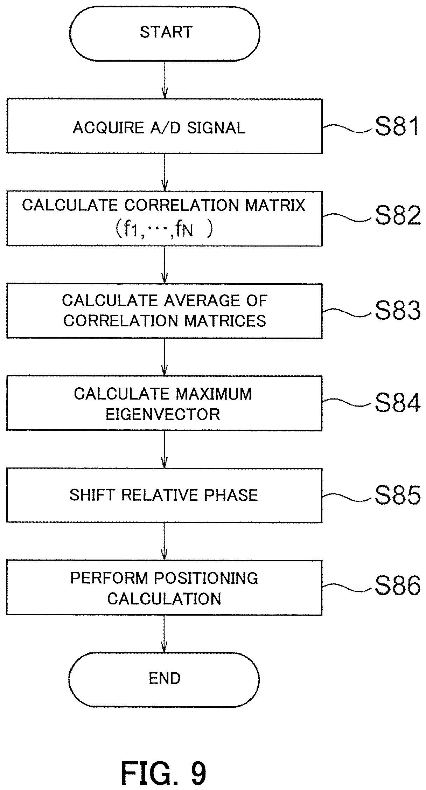

FIG. 9 is a flow chart for illustrating operation processing of from the correlation matrix calculation to the positioning calculation to be executed by the CPU 101 being a main part of the radio wave receiver in the second embodiment.

Referring to FIG. 9, first, in Step S81, the CPU 101 acquires, from the input interface 105, digital signals relating to received signals of a plurality of frequencies after A/D conversion. In this manner, A/D signal acquisition is performed.

Next, in Step S82, the CPU 101 uses a function of the correlation matrix calculation unit 70a of the relative phase combining unit 70 to calculate a correlation matrix from each of the acquired digital signals of the plurality of frequencies $f_1$, ..., $f_N$. As a result, correlation matrix calculation ($f_1$, ..., $f_N$) is performed.

Further, in Step S83, the CPU 101 uses a function of the correlation matrix averaging unit 70b of the relative phase combining unit 70 to calculate an average of correlation matrices calculated among the plurality of frequencies. As a result, correlation matrix averaging calculation is performed.

Next, in Step S84, the CPU 101 uses a function of the maximum eigenvector calculation unit 70c of the relative phase combining unit 70 to calculate an eigenvector corresponding to the maximum eigenvalue of the correlation matrix after averaging calculation. In this manner, maximum eigenvector calculation is performed.

After that, in Step S85, the CPU 101 uses a function of the relative phase shifting unit 8 to correct, by shift processing, a deviation in offset and a deviation in phase between reception channels due to the averaging calculation. In this manner, relative phase shifting is performed.

Lastly, in Step S86, the CPU 101 uses a function of the positioning calculation unit 9 to perform positioning calculation by, for example, the method described in Patent Literature 1 by using the relative phase after the shift processing.

As described above, it is possible to reduce a positioning error also with the method described in the second embodiment. The displacement measurement device 10 according to the first embodiment averages relative phases, and thus even when a signal-to-noise ratio is different for each of the plurality of frequencies, information representing this fact is not considered at the time of averaging. In contrast, in the second embodiment, averaging calculation is performed by using a correlation matrix taking amplitude information on the plurality of frequencies into consideration is performed, and thus there is obtained an effect of enabling execution of weighted averaging that depends on the amplitude for each frequency.

Reference Signs List

1(1) to 1(L) radio wave transmitter, 2(1) to 2(M) reception antenna, 3(1) to 3(M) transfer cable, 4(1) to 4(M) low noise amplifier (LNA), 5(1) to 5(M) frequency converter (D/C), 6(1) to 6(M) A/D converter, 7, 70 relative phase combining unit, 7a relative phase calculation unit, 7b relative phase averaging unit, 8 relative phase shifting unit, 9 positioning calculation unit, 10 displacement measurement device, 70a correlation matrix calculation unit, 70b correlation matrix averaging unit, 70c maximum eigenvector calculation unit, 101 CPU, 102 memory, 103 auxiliary storage device, 104 display device, 105 input interface

**Claims**

1.  A displacement measurement device, comprising:

    a radio wave transmitter installed at a measurement position; and
    a radio wave receiver installed at a fixed position,
    wherein the radio wave transmitter is configured to transmit radio waves of a plurality of frequencies via a transmission antenna,
    wherein the radio wave receiver is configured to calculate a positioning value of the transmission antenna of the radio wave transmitter based on results of receiving the radio waves of the plurality of frequencies transmitted from the radio wave transmitter via the transmission antenna, and
    wherein the radio wave receiver includes:

    M reception antennas (where M represents a positive integer of two or more) each configured to output received signals indicating the results of receiving the radio waves of the plurality of frequencies transmitted from the radio wave transmitter;
    a relative phase combining unit configured to combine, for the plurality of frequencies, relative phases between the M reception antennas;
    a relative phase shifting unit configured to shift the relative phase combined by the relative phase combining unit based on a difference in observed phase between the M reception antennas; and
    a positioning calculation unit configured to calculate the positioning value of the transmission antenna based on the relative phase shifted by the relative phase shifting unit.

2.  The displacement measurement device according to claim 1, wherein the relative phase combining unit includes:

    a relative phase calculation unit configured to calculate the relative phases for the respective plurality of frequencies; and
    a relative phase averaging unit configured to calculate an average of the relative phases for the respective plurality of frequencies.

3.  The displacement measurement device according to claim 1, wherein the relative phase combining unit includes:

    a correlation matrix calculation unit configured to calculate a correlation matrix based on the received signal obtained by each of the M reception antennas;
    a correlation matrix averaging unit configured to calculate an average of the correlation matrices between the plurality of frequencies; and
    a maximum eigenvector calculation unit configured to calculate a relative phase based on an eigenvector corresponding to a maximum eigenvalue of the correlation matrix averaged by the correlation matrix averaging unit .

4.  The displacement measurement device according to claim 2, wherein the relative phase shifting unit is configured to shift the relative phase after the averaging calculation by the relative phase averaging unit to a position of a relative phase obtained based on positioning values of the radio wave transmitter and the M reception antennas.

5.  The displacement measurement device according to claim 2, wherein the relative phase shifting unit is configured to shift the relative phase after the averaging calculation by the relative phase averaging unit to an initial value of a relative phase of a reference frequency.

**FIG. 1**

101                              102

CPU                            MEMORY

AUXILIARY          DISPLAY          INPUT
STORAGE DEVICE     DEVICE           INTERFACE

103                 104               105

# FIG. 2

7

RELATIVE PHASE
CALCULATION UNIT          7a

RELATIVE PHASE
AVERAGING UNIT            7b

# FIG. 3

EP 3 767 321 A1

START

ACQUIRE A/D SIGNAL ～S31

CALCULATE RELATIVE PHASE
$(f_1, \cdots, f_N)$ ～S32

CALCULATE AVERAGE OF
RELATIVE PHASES ～S33

SHIFT RELATIVE PHASE ～S34

PERFORM POSITIONING
CALCULATION ～S35

END

FIG. 4

FIG. 5

| NUMBER OF RADIO WAVE TRANSMITTERS | 1 |
|---|---|
| NUMBER OF RECEPTION ANTENNAS | 6 |
| TRANSMISSION FREQUENCY | 922.5MHz<br>925.1MHa<br>927.5MHz |
| NUMBER OF TIMES OF POSITIONING | 8 TIMES |
| RADIO WAVE TRANSMITTER DISPLACEMENT SPECIFICATION | DISPLACEMENT OF 10 mm ALONG X-AXIS BETWEEN FOURTH SAMPLE AND FIFTH SAMPLE |
| RADIO WAVE TRANSMITTER TRANSMISSION POWER | 20mW |
| END RADIO WAVE TRANSMITTER TRANSMISSION PULSE LENGTH | 130ms |
| SAMPLING FREQUENCY | 2MHz |

# FIG. 6

FIG. 7

FIG. 8

START

ACQUIRE A/D SIGNAL — S81

CALCULATE CORRELATION MATRIX
$(f_1, \cdots, f_N)$ — S82

CALCULATE AVERAGE OF
CORRELATION MATRICES — S83

CALCULATE MAXIMUM
EIGENVECTOR — S84

SHIFT RELATIVE PHASE — S85

PERFORM POSITIONING
CALCULATION — S86

END

# FIG. 9

**EP 3 767 321 A1**

INTERNATIONAL SEARCH REPORT

International application No.

PCT/JP2018/016485

A.  CLASSIFICATION OF SUBJECT MATTER
Int. Cl. G01S5/06(2006.01)i

According to International Patent Classification (IPC) or to both national classification and IPC

B.  FIELDS SEARCHED

Minimum documentation searched (classification system followed by classification symbols)
Int. Cl. G01S5/00-5/14, 7/00-7/42, 13/00-13/95

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)
JSTPlus/JMEDPlus/JST7580 (JDreamIII)

C.  DOCUMENTS CONSIDERED TO BE RELEVANT

| Category* | Citation of document, with indication, where appropriate, of the relevant passages | Relevant to claim No. |
|---|---|---|
| A | JP 2009-53023 A (MITSUBISHI ELECTRIC CORP.) 12 March 2009, entire text, all drawings (Family: none) | 1-5 |
| A | JP 3602403 B2 (MITSUBISHI ELECTRIC CORP.) 15 December 2004, entire text, all drawings (Family: none) | 1-5 |
| A | JP 2015-201783 A (SUMITOMO ELECTRIC INDUSTRIES, LTD.) 12 November 2015, entire text, all drawings (Family: none) | 1-5 |
| A | JP 2007-24642 A (NTT DOCOMO INC.) 01 February 2007, entire text, all drawings (Family: none) | 1-5 |

☐ Further documents are listed in the continuation of Box C.          ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 02.07.2018 | 10.07.2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**EP 3 767 321 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3602403 B